# EUROPÄISCHE PATENTSCHRIFT

(11) **EP 2 708 757 B1**
(45) Veröffentlichungstag und Bekanntmachung des Hinweises auf die Patenterteilung: **13.12.2017**
(21) Anmeldenummer: 13183558.9
(22) Anmeldetag: 09.09.2013
(51) Int. Cl.: F15B 13/042, F16K 31/385, F15B 11/06, F15B 21/04

(54) **Schnellentlüfter**
Rapid action venting device
Purge d'air rapide

(30) Priorität: 13.09.2012 DE 102012108559
(43) Veröffentlichungstag der Anmeldung: 19.03.2014
(73) Patentinhaber: Samson AG, 60314 Frankfurt (DE)
(72) Erfinder: Valentin-Rumpel, Frank, 64823 Groß-Umstadt (DE); Lauterjung, Bernd, 69680 Chassieu (FR)
(74) Vertreter: Puschmann Borchert Bardehle Patentanwälte Partnerschaft mbB

(56) Entgegenhaltungen:
- EP-A1- 0 540 817
- DE-U1- 29 605 420
- US-A- 2 716 997
- US-A- 4 878 513
- US-A- 5 337 788

## Beschreibung

Die Erfindung betrifft einen Schnellentlüfter gemäß den Merkmalen des Oberbegriffs des Anspruchs 1.

Schnellentlüfter sind den Druckschriften DE 692 07 723 T2, DE 1 1 87 441 B, DE 26 11 653 C2 und DE 1 243 484 B zu entnehmen.
Insbesondere offenbart die AT 332 187 B ein Schnellentlüftungsventil mit den Merkmalen, dass ein Gehäuse mit einem Eingangsanschluss, einem Entlüftungsanschluss gegen Atmosphäre und einem Ausgangsanschluss vorgesehen ist, wobei am Entlüftungsanschluss ein Entlüftungsventil angeordnet ist. Das Entlüftungsventil ist abhängig vom Druckquotienten zwischen Ausgangsanschluss und Eingangsanschluss ansteuerbar, wobei in einem ersten Betriebsfall - Belüftung - das Entlüftungsventil durch einen im Gehäuse liegenden Ventilkörper geschlossen ist, und in einem zweiten Betriebsfall - Entlüftung - das Entlüftungsventil geöffnet ist, wodurch der Ausgangsanschluss entlüftet wird. Ferner weist das Entlüftungsventil eine erste Steuerfläche, die mit dem Eingangsanschluss verbunden ist und eine zweite Steuerfläche, die mit dem Ausgangsanschluss verbunden ist, auf.
Problematisch ist dies vor allem bei der Regelung eines an den Ausgangsanschluss angeschlossenen Antriebs im Druckbereich des für die Öffnung des Entlüftungsventils erforderlichen Druckquotienten. Da in diesem Bereich das Entlüftungsventil öffnet, muss der dadurch hervorgerufene Druckabfall durch die Regelung eines Stellungsreglers ausgeglichen werden.

Die DE 296 05 420 U1 offenbart ein Entlüftungsventil, wobei das Entlüftungsventil ein Rückschlagventil umfasst, das den Eingangsanschluss im Falle eines Druckabfalls am Eingang gegenüber dem Ausgang sperrt und eine Entlüftung des Ausgangs einleitet.

Die US 4,878,513 A betrifft ein Enlüftungsventil gemäß dem Oberbegriff von Anspruch 1, das über eine Membran verschlossen werden kann. Ferner ist ein Bypass vorgesehen.
Es ist Aufgabe der Erfindung ein gattungsgemäßes Schnellentlüftungsventil derart zu verbessern, dass eine Regelung des Antriebs in einem breiteren Druckspektrum möglich ist, ohne dass das Entlüftungsventil des Schnellentlüfters anspricht.
Die Erfindung zeichnet sich dadurch aus, dass der Ausgangsanschluss über eine im Gehäuse integrierte, insbesondere einstellbare Drossel mit der ersten Steuerfläche verbunden ist.
Durch die Integration einer einstellbaren Drossel in das Ventilgehäuse kann der Druckausgleich von
Ausgangsanschluss zu Eingangsanschluss bei abfallendem Steuerdruck so auf das Verhalten des Entlüftungsventils abgestimmt werden, dass das Entlüftungsventil nur gezielt öffnet. Dadurch kann die Regelung des Antriebs auf die Bedürfnisse der Anwendung optimal eingestellt werden. Dies garantiert eine zuverlässige Entlüftung in Notfallsituationen und bietet auf der anderen Seite die Einstellbarkeit des Druckbereichs zur Regelung.
In einer weiteren vorteilhaften Ausgestaltung der Erfindung kann ein Durchgangsventil, insbesondere ein Rückschlagventil, vorgesehen sein, welches parallel zur Drossel angeordnet ist, und welches in einer Strömungsrichtung von Ausgangsanschluss zu Eingangsanschluss sperrt und in der umgekehrten Strömungsrichtung die Drossel überbrückt.
Die Überbrückung der Drossel mit einem Rückschlagventil hat den Vorteil, dass im Belüftungsfall das Ansprechverhalten des Antriebs erheblich verbessert wird, wohingegen bei absinkendem Steuerdruck gegenüber dem Antriebsdruck das durch die einstellbare Drossel beeinflusste Regelverhalten erzielt wird.
Vorzugsweise kann der Ventilkörper des Entlüftungsventils in Form einer Scheibe ausgebildet sein, die über eine Membran am Gehäuse befestigt ist, wobei die Membran zusammen mit dem Ventilkörper den Ausgangsanschluss und den Eingangsanschluss voneinander trennt, und das Entlüftungsventil geschlossen wird, indem der scheibenförmige Ventilkörper auf den Ventilsitz gedrückt ist.
Durch Membran und Ventilkörperscheibe kann über die Flächenverhältnisse ein Druckquotient für den Entlüftungsfall präzise eingestellt werden. Durch die präzise Einstellung dieses Schaltpunkts kann in Verbindung mit der Einstellung der Drossel das Regelverhalten des Schnellentlüftungsventils genau eingestellt werden.

In einer weiteren Ausführung kann vorgesehen sein, dass das Rückschlagventil eine Feder aufweist, durch die ein Druckquotient-Schwellwert gezielt eingestellt wird. Dadurch kann der Arbeitspunkt des Schnellentlüftungsventils eingestellt werden.

Ferner ist ein Einstellmittel vorgesehen, welches eine maximale Hubbegrenzung für den Ventilkörper darstellt. Durch die insbesondere einstellbare Hubbegrenzung kann der Durchflussfaktor, der sogenannte kv-Wert, des Entlüftungsanschlusses festgelegt werden.

Besonders vorteilhaft kann das Schnellentlüftungsventil in einer Anordnung, umfassend einen Stellungsregler und einen pneumatischen Antrieb, eingesetzt werden, wobei der Stellungsregler mit dem Eingangsanschluss des Schnellentlüfters und der Antrieb mit dem Ausgangsanschluss des Schnellentlüfters verbunden ist.

Vorzugsweise kann in einer solchen Anordnung der pneumatische Antrieb ein Membranantrieb sein, der eine Membrankammer und eine Federkammer aufweist, wobei der Ausgangsanschluss des Schnellentlüfters mit der Membrankammer und der Entlüftungsanschluss der Schnellentlüfters mit der Federkammer verbunden ist.

Gerade in einer Anordnung unter Verwendung eines Membranantriebs ist die Einstellung der Regelung durch den Schnellentlüfter in einem Regelbereich bei dem der Druckabfall des Steuerdrucks nicht sofort zur Entlüftung des Antriebs führt besonders wichtig, das durch dies aufgrund der Feder- Membran Kombination zu einem Aufschwingen des Systems führt.

Durch die Verbindung des Entlüftungsanschlusses mit der Federkammer wird diese bei jeder Entlüftung gespült.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Schnittansicht eines Schnellentlüfters und
- Fig. 2: eine durch die Drosseleinstellung angepasstes Druckverhalten des erfindungsgemäßen Schnellentlüftungsventils.

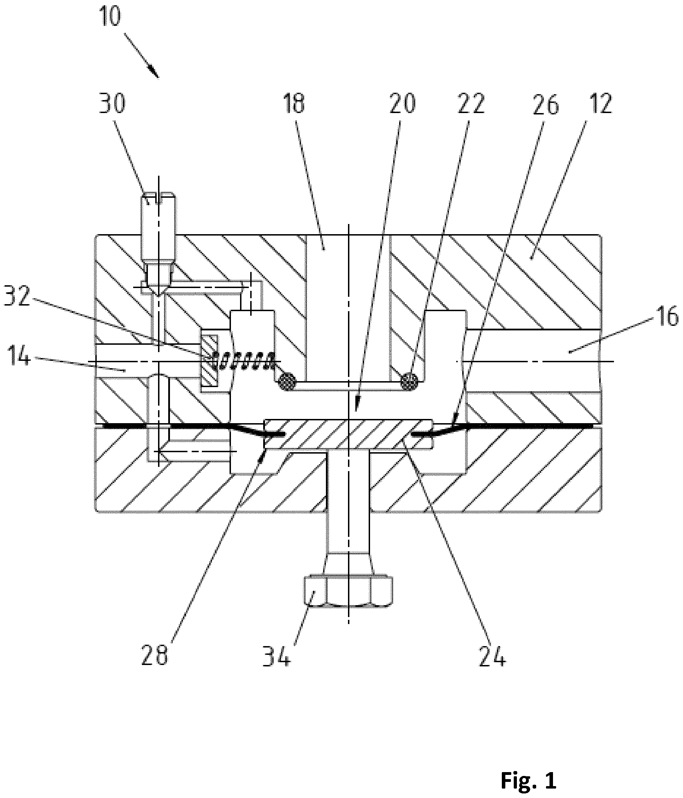

Fig. 1 zeigt eine Schnittansicht eines Schnellentlüfters 10. Dieser umfasst ein Gehäuse 12 mit einem Eingangsanschluss 14, einem Ausgangsanschluss 16 sowie einem Entlüftungsanschluss 18. Der Entlüftungsanschluss 18 entlüftet den Ausgang 16 gegen Atmosphäre. Der Entlüftungsanschluss 18 ist über ein Entlüftungsventil 20, umfassend einen Ventilsitz 22 und einen Ventilkörper 24, mit dem Ausgangsanschluss 16 verbunden. Der Ventilkörper 24 besteht aus einem scheibenartigen Dichtkörper, der über eine Membran beweglich am Gehäuse 12 gelagert ist. Die Lage des Ventilkörpers 24 wird beeinflusst, indem ein Druck auf die erste Steuerfläche 26 ausgeübt wird. Die zweite Steuerfläche 28, die der ersten gegenüber liegt, wird mit dem Druck, der am Eingangsanschluss 14 herrscht, beaufschlagt. Eine Entlüftung des Ausgangsanschlusses 16 erfolgt gemäß einem durch die Wahl der Größe der Steuerflächen 26, 28 eingestellten Druckquotienten von Eingangsanschluss 14 zu Ausgangsanschluss 16. Aufgrund der Querschnittswahl von Ausgangsanschluss 16 und Entlüftungsanschluss 18 erfolgt bei Öffnung des Entlüftungsventils 20 ein schnelles Entlüften des Ausgangsanschlusses 16.
Ferner ist zwischen Eingangsanschluss 14 und Ausgangsanschluss 16 ein Rückschlagventil 32 vorgesehen, welches bei auslassseitigem Überdruck sperrt. Durch das Rückschlagventil 32 wird die Dynamik bei Belüften des Ausgangsanschlusses verbessert.
Im Übergang von Eingangs- zu Ausgangsanschluss 16 ist eine Drossel im Gehäuse integriert, um ein schlagartiges Entlüften während des Regelvorgangs zu vermeiden. Diese Drossel ist einstellbar. Durch die Einstellung der Drossel wird das Verhalten des Schnellentlüfters beeinflusst. Zudem ist eine Einstellschraube 34 so integriert, dass eine Hubbegrenzung des Ventilkörpers 24 einstellbar ist. Durch die Einstellschraube 34 kann der Durchflussfaktor des Entlüftungsanschlusses 18 für den Entlüftungsfall eingestellt werden.

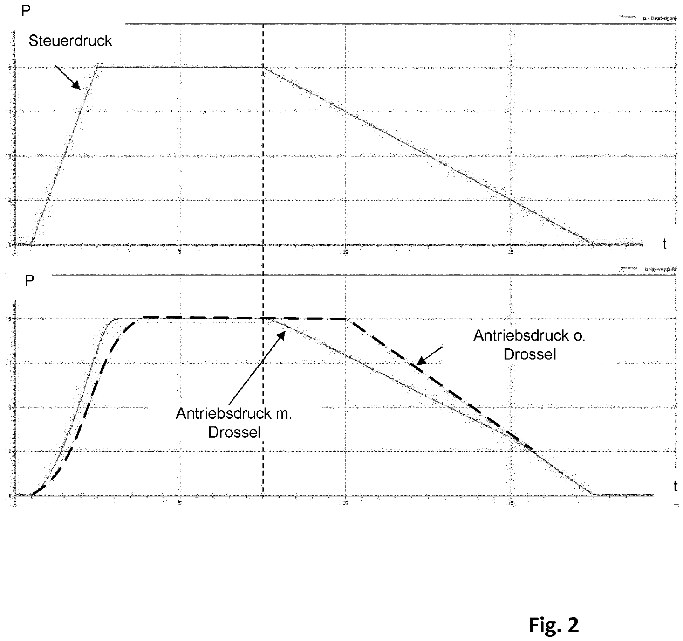

Wie in Fig. 2 dargestellt, ist das Verhältnis von erster Steuerfläche 28 zu zweiter Steuerfläche 26 so gewählt, dass das Entlüftungsventil 20 bei einem bestimmten Druckverhältnis von Eingangs- zu Ausgangsdruck öffnet. Im vorliegenden Fall ist das Druckverhältnis auf 4/5 eingestellt. Bei abnehmendem Steuerdruck würde ohne Drossel 30 bei einem gesperrten Rückschlagventil 32 der Druck auslassseitig konstant bleiben. Dies ist anhand der Kennlinie Antriebsdruck ohne Drossel nachvollziehbar. Beträgt der Steuerdruck nur noch 4/5 des auslassseitigen Drucks, öffnet das Entlüftungsventil 20. Ohne Drossel ist dies im gewählten Beispiel bei 4,0 bar der Fall. Mit der gewählten Drosseleinstellung hingegen, kann über die Drossel ein Druckausgleich mit der Einlassseite des Schnellentlüfters erfolgen, wodurch eine Druckabsenkung bis 2,5 bar möglich ist, bis das notwendige Druckverhältnis von 4/5 erreicht ist, um das Entlüftungsventil 20 zu öffnen. Dies ist anhand der Kennlinie Antriebsdruck mit Drossel dargestellt. Dies hat zur Folge, dass eine Ansteuerung des Antriebes durch das Entlüftungsventil 20 hindurch bis zu einer deutlich niedrigeren Absolutdruckzahl möglich ist, ohne dass das Entlüftungsventil 20 auslöst. Dadurch wird eine hohe Regelgüte der Antriebsposition auch im Betriebszustand Entlüften und auch bei kleinen Sollwertänderungen möglich.

### Bezugszeichenliste

- 10: Schnellentlüfter
- 12: Gehäuse
- 14: Eingangsanschluss
- 16: Ausgangsanschluss
- 18: Entlüftungsanschluss
- 20: Entlüftungsventil
- 22: Ventilsitz
- 24: Ventilkörper
- 26: zweite Steuerfläche
- 28: erste Steuerfläche
- 30: Drossel
- 32: Rückschlagventil
- 34: Einstellschraube

## Patentansprüche

1. Schnellentlüfter (10), umfassend ein Gehäuse (12) mit einem Eingangsanschluss (14), einem Entlüftungsanschluss (18) gegen Atmosphäre und einem Ausgangsanschluss (16), wobei am Entlüftungsanschluss (18) ein Entlüftungsventil (20) vorgesehen ist, welches abhängig von Druckquotienten von Eingangsanschluss (14) zu Ausgangsanschluss (16) und ansteuerbar ist, wobei in einem ersten Betriebsfall - Belüftung - das Entlüftungsventil (20) durch einen im Gehäuse (12) liegenden Ventilkörper (24) geschlossen ist, und in einem zweiten Betriebsfall - Entlüftung - das Entlüftungsventil (20) geöffnet ist, wodurch der Ausgangsanschluss (16) entlüftet wird und ferner das Entlüftungsventil (20) eine erste Steuerfläche (28) aufweist, die mit dem Eingangsanschluss (14) verbunden ist und eine zweite Steuerfläche (26) aufweist, die mit dem Ausgangsanschluss (16) verbunden ist, wobei der Ausgangsanschluss (16) über eine im Gehäuse (12) integrierte Drossel (30) mit der ersten Steuerfläche (28) verbunden ist, **dadurch gekennzeichnet, dass** die integrierte Drossel eine einstellbare Drossel (30) ist.

2. Schnellentlüfter nach Anspruch 1, **dadurch gekennzeichnet, dass** ein Durchgangsventil vorgesehen ist, insbesondere ein Rückschlagventil (32), welches parallel zur einstellbaren Drossel (30) angeordnet ist, und welches in einer Strömungsrichtung vom Ausgangsanschluss (16) zum Eingangsanschluss (14) sperrt und in der umgekehrten Strömungsrichtung die einstellbare Drossel (30) überbrückt.

3. Schnellentlüfter nach einem der Ansprüche 1 bis 2, **dadurch gekennzeichnet, dass** der Ventilkörper (24) in Form einer Scheibe ausgebildet ist, die über eine Membran am Gehäuse (12) befestigt ist, wobei die Membran mit dem Ventilkörper (24) einen Ausgangsanschluss (16) und Eingangsanschluss (14) trennt, und das Entlüftungsventil (20) geschlossen wird, indem der scheibenförmige Ventilkörper (24) auf einen Ventilsitz (22) des Entlüftungsventils (20) gedrückt wird.

4. Schnellentlüfter nach einem der Ansprüche 2 oder 3, **dadurch gekennzeichnet, dass** das Rückschlagventil (32) eine Feder aufweist, durch die der zur Öffnung des Entlüftungsventils (20) notwendige Druckquotient einstellbar ist.

5. Schnellentlüfter nach einem der vorangehenden Ansprüche, **dadurch gekennzeichnet, dass** ein Einstellmittel (34) vorgesehen ist, das den maximalen Hub des Ventilkörpers (24) beschränkt.

6. Anordnung umfassend einen Stellungsregler, einen pneumatischen Antrieb und einen Schnellentlüfter (10) nach einem der vorangehenden Ansprüche, wobei ein pneumatischer Stellungsregler mit dem Eingangsanschluss (14) des Schnellentlüfters (10) und der Antrieb mit dem Ausgangsanschluss (16) des Schnellentlüfters (10) verbunden ist.

7. Anordnung nach dem vorangehenden Anspruch 6, **dadurch gekennzeichnet, dass** der pneumatische Antrieb ein Membranantrieb ist, der eine Membrankammer und eine Federkammer aufweist, wobei der Ausgangsanschluss (16) der Schnellentlüfteranordnung mit der Membrankammer und der Entlüftungsanschluss (18) der Schnellentlüfteranordnung mit der Federkammer verbunden ist.

## Claims

1. Rapid action venting device (10) comprising a housing (12) with an input port (14), a vent port (18) open to atmosphere and an output port (16), with a vent valve (20) being provided at the vent port (18), which valve is independent of the input port (14) to output port (16) pressure ratio and is controllable, wherein, in a first mode of operation - aerating - the vent valve (20) is closed by a valve body (24) located within the housing (12), and in a second mode of operation - de-aerating - the vent valve (20) is open, causing the output port (16) to be deaerated, and the vent valve (20) furthermore has a first control surface (28) which is connected to the input port (14) and a second control surface (26) which is connected to the output port (16), with the output port (16) being connected to the first control surface (28) via a choke (30) integrally formed in the housing (12), **characterized in that** the integrated choke is an adjustable choke (30).

2. Rapid action venting device according to claim 1, **characterized in that** a two-way valve is provided, in particular a non-return valve (32), which is arranged parallel to the adjustable choke (30) and which blocks a flow in a direction of flow from the output port (16) to the input port (14) and which bridges the adjustable choke (30) in the reverse direction of flow.

3. Rapid action venting device according to one of claims 1 to 2, **characterized in that** the valve body (24) is in the shape of a disk which is mounted on the housing (12) via a diaphragm, wherein said diaphragm, together with the valve body (24), separates an output port (16) from an input port (14), and said vent valve (20) is closed by pressing the disk-shaped valve body (24) onto a valve seat (22) of the vent valve (20).

4. Rapid action venting device according to one of claims 2 or 3, **characterized in that** the non-return valve (32) includes a spring which can be used to adjust the pressure ratio required for opening the vent valve (20).

5. Rapid action venting device according to one of the preceding claims, **characterized in that** an adjustment means (34) is provided which restricts the maximum lift of the valve body (24).

6. Arrangement comprising a positioner, a pneumatic drive, and a rapid action venting device (10) according to one of the preceding claims, wherein a pneumatic positioner is connected to the input port (14) of the rapid action venting device (10) and the drive is connected to the output port (16) of the rapid action venting device (10).

7. Arrangement according to claim 6 above, **characterized in that** the pneumatic drive is a diaphragm drive which includes a diaphragm chamber and a spring chamber, wherein the output port (16) of the rapid action venting device arrangement is connected to the diaphragm chamber and the vent port (18) of the rapid action venting device arrangement is connected to the spring chamber.

## Revendications

1. Purgeur d'air rapide (10), comprenant une enveloppe (12) pourvue d'un raccord d'entrée (14), d'un raccord de purge d'air (18) par rapport à l'atmosphère et d'un raccord de sortie (16), une soupape de purge d'air (20) étant prévue sur le raccord de purge d'air (18), laquelle peut être commandée en fonction des quotients de pression du raccord d'entrée (14) au raccord de sortie (16), la soupape de purge d'air (20), dans un premier cas d'utilisation -l'aération- étant fermée par un corps de soupape (24) situé dans l'enveloppe (12), et dans un deuxième cas d'utilisation -la purge d'air- la soupape de purge d'air (20) étant ouverte, ce qui a pour effet que l'air est purgé du raccord de sortie (16), et, en outre, la soupape de purge d'air (20) comprend une première surface de commande (28) qui est reliée au raccord d'entrée (14) et comprend une deuxième surface de commande (26) qui est reliée au raccord de sortie (16), le raccord de sortie (16) étant relié à la première surface de commande (28) par un organe d'étranglement (30) intégré dans l'enveloppe (12), **caractérisé en ce que** l'organe d'étranglement intégré est un organe d'étranglement (30) réglable.

2. Purgeur d'air rapide selon la revendication 1, **caractérisé en ce qu'**une soupape droite est prévue, en particulier une soupape anti-retour (32), laquelle est agencée parallèlement à l'organe d'étranglement (30) réglable, et laquelle effectue un blocage dans une direction d'écoulement allant du raccord de sortie (16) au raccord d'entrée (14) et, dans la direction d'écoulement inverse, ponte l'organe d'étranglement (30) réglable.

3. Purgeur d'air rapide selon l'une quelconque des revendications 1 à 2, **caractérisé en ce que** le corps de soupape (24) est réalisé sous la forme d'un disque, qui est fixé à l'enveloppe (12) par une membrane, la membrane comprenant le corps de soupape (24) séparant un raccord de sortie (16) et un raccord d'entrée (14), et la soupape de purge d'air (20) étant fermée, du fait que le corps de soupape (24) en forme de disque est pressé sur un siège de soupape (22) de la soupape de purge d'air (20).

4. Purgeur d'air rapide selon l'une quelconque des revendications 2 ou 3, **caractérisé en ce que** la soupape anti-retour (32) comprend un ressort au moyen duquel le quotient de pression nécessaire à l'ouverture de la soupape de purge d'air (20) est réglable.

5. Purgeur d'air rapide selon l'une quelconque des revendications précédentes, **caractérisé en ce qu'**un moyen de réglage (34) est prévu, qui limite la course maximale du corps de soupape (24).

6. Ensemble comprenant un régulateur de position, un entraînement pneumatique et un purgeur d'air rapide (10) selon l'une quelconque des revendications précédentes, un régulateur de position pneumatique étant relié au raccord d'entrée (14) du purgeur d'air rapide (10) et l'entraînement étant relié au raccord de sortie (16) du purgeur d'air rapide (10).

7. Ensemble selon la revendication 6, **caractérisé en ce que** l'entraînement pneumatique est un entraînement à membrane, qui comprend une chambre de membrane et une chambre de ressort, le raccord de sortie (16) de l'ensemble purgeur d'air rapide étant relié à la chambre de membrane et le raccord de purge d'air (18) de l'ensemble purgeur d'air rapide étant relié à la chambre de ressort.
